# EUROPEAN PATENT SPECIFICATION

(11) **EP 1 158 745 B1**
(45) Date of publication and mention of the grant of the patent: **03.09.2003**
(21) Application number: 01109912.4
(22) Date of filing: 24.04.2001
(51) Int. Cl.: H04L 29/06

(54) **Method and system for secure pervasive access**
Vorrichtung und Verfahren mit sicherem und öffentlichem Zugang
Méthode et système avec accès universel et sécurisé

(30) Priority: 26.05.2000 EP 00111338
(43) Date of publication of application: 28.11.2001
(73) Proprietor: International Business Machines Corporation, Armonk, NY 10504 (US)
(72) Inventor: Henn, Horst, Dr., 71034 Böblingen (DE); Herrendörfer, Dirk, 71065 Sindelfingen (DE); Schäck, Thomas, 77855 Achern (DE); Weber, Roland, 76133 Karlsruhe (DE)
(74) Representative: Klein, Hans-Jörg

(56) References cited:
- WO-A-00/02358
- WO-A-00/11832

## Description

### Technical Field

The present invention relates to method and system for controlling access from different Pervasing Computing Devices (PVC-devices) to applications installed on or accessible via a server.

### Background of the invention

PVC-devices, e.g. personal digital assistants, mobile phones, chipcards etc., are frequently used to gather information or to use business transactions applications stored on server, e.g. application for electronic payments or application for electronic shopping.

Wireless PVC-devices like personal digital assistants and mobile phones communicate via gateway and Internet to a server which offers access to Web pages or business transaction application. Other PVC-devices like chipcards may use a LAN, Intranet or Internet to communicate with the said server.

A main problem of communication between different PVC-devices and the business transaction applications is the security. Normally each business transaction application may use its own security requirements depending on the type of PVC-device, the type of user and type of communication.

Security requirements may consist of an authentication level, a confidentiality level and an endorsement level. PVC-devices can establish a certain authentication level by performing appropriate authentication protocol and a certain level of confidentiality by employing appropriate encryption to secure communication between the server and certain level of endorsement.

Today, to applicant's knowledge, no secure, integrated solution for security based access control from various PVC-devices to applications/functions on a server exists. Applications are mostly developed to support few devices. Security requirements and authentication code are mostly buried in the application code.

In current PVC-applications, it is difficult to add support for additional PVC-devices and authentication mechanism. In most cases, applications allow for at most one authentication mechanism, mostly coupled with an application.

International Patent Publication WO 00/11832 discloses a global server which includes a communications engine for establishing a communications link with a client; security means coupled to the communications engine for determining client privileges; a servlet host engine coupled to the security means for providing to the client, based on the client privileges, and applet which enables I/O with a secured service; and a keysafe for storing a key which enables access to the secured service. The global server may be coupled to multiple sites, wherein each site provides multiple services. Each site may be protected by a firewall. Accordingly, the global server stores the keys for enabling communication via the firewalls with the services.

International Patent Publication WO 00/02358 discloses a method, apparatus, memory card, and system for establishing a secure connection between a wireless communication apparatus and a data communication apparatus based on a wireless application protocol. The wireless communication apparatus is provided with contact means for receiving information from a separate unit provided with memory means. The memory means comprising information to control the access of the wireless communication apparatus through a wireless communication network connected to said data communication apparatus.

It is therefore the object of the present invention to provide a system and method for a security based access control from various PVC-devices to applications which is independent from any client or application.

This object is solved by the features of the independent claims. Preferred embodiments of the present invention are laid down in the dependent claims.

### Summary of the invention

The present invention relates to a client-server system having a security system for controlling access to application functions. The security system separated from the clients and the application functions routes all incoming requests created by various PVC-devices to a centralized security system providing an authentication component and a security component. The authentication component provides several authentication mechanism which may be selected by information contained in the client's request. The authentication mechanism may be changed or extended without changing conditions on the client as well on the server or application side. The security component provides a security policy describing security requirements for accessing application functions which may be invoked by the security component. If the selected authentication mechanism succeeds and fulfills the security policy associated to that application function then the application function will be invoked by the security component.

In a preferred embodiment, the present invention provides a session object for each PVC-device that communicates with the server. One of the session object's attributes is a security state. The security state at least indicates the level of security of authentication and/or the level of confidentiality of communication with the PVC-device. The server has a security policy, that determines which application function may be invoked at what security level. Application functions on a server can only be invoked via the Secure Pervasive Access Framework (SPAF). For each request to invoke a application function, SPAF checks whether the security state of the client device satisfies the access conditions defined in the security policy for that application function; only if this is the case, SPAF invokes the requested application function.

Preferably all incoming requests are routed through the Device Adaptation Layer. This layer includes different kinds of gateways that convert device specific requests to a canonical form, i.e. HTTP requests that carry information about the device type and the desired reply content type, e.g. HTML, WML or VXML. Examples of such gateways are voice gateways with a VXML browser that recognizes speech and generates HTTP requests that carry text and selected options or a WAP gateway that connects the WAP protocol stack to the Internet protocol stack.

SPAF checks all incoming requests and invokes application function according to the associated security policies, which may be stored in a special database, for example. The security policies may be very different, for example one non-sensitive application function may only have functions that accessible to everybody, while another application may have certain functions that may only be performed by clients that have been authenticated by the security module using a cryptographic protocol.

Calls of application functions by SPAF result in execution of application logic, maybe including access to databases or legacy systems in the background and some output that must be delivered to the user. All information to be displayed is prepared by the application logic and passed to the content delivery module. The content delivery module renders this information into content that depends on the device type and desired reply content type.

### Brief Description of the Drawings

The present invention will be better understood and its numerous objects and advantages will become more apparent to those skilled in the art by reference to the following drawings, in conjunction with the accompanying specification, in which
- FIG.1: shows a communication architecture in which the present invention may be used
- FIG.2: shows the secure pervasive access architecture as used by the present invention
- FIG.3: shows authentication and access via secure pervasive access as used by the present invention
- FIG.4: shows the basic method steps of the present invention
- FIG.5: shows the method of the delivery module as preferably used by the present invention
- FIG.6: shows the method of the PVC-Proxy as preferably used by the present invention

### Detailed description of the preferred embodiment

Before going into details of specific embodiments, it will be helpful to understand from a more general perspective the various elements and methods which may be related to the present invention.

An important feature of the present invention is the Secure Pervasive Access Framework (SPAF). SPAF builds the interface to various components of the invention. It receives the requests from the different PVC-devices, checks the security state of the respective PVC-device and gives access to the requested functions/application if the access conditions defined by the security policy are fulfilled. The security state of the respective PVC-device may be checked by own programs, e.g. plug-ins, using authentication mechanism like password/userID, challenge response, digital signature and so on. These plug-ins are totally independent from any application/function to be accessed. Access to an application/function will be exclusively controlled by the SPAF via the security policy. Security level of a certain application/function may be changed without changing application function to be accessed. The application logic itself remains unchanged. This is an important advantage of the present invention.

Another feature of the present invention - which may be used optionally - is the Device Adaptation Layer (DAL).

It receives device specific requests and generates a canonical form which is able to specify information about the device type and the desired reply content. The information contained in the canonical request is used for executing the respective authentication mechanism by using the appropriate plug-in. The DAL is able to support any protocol, e.g. HTTPS and WAP.

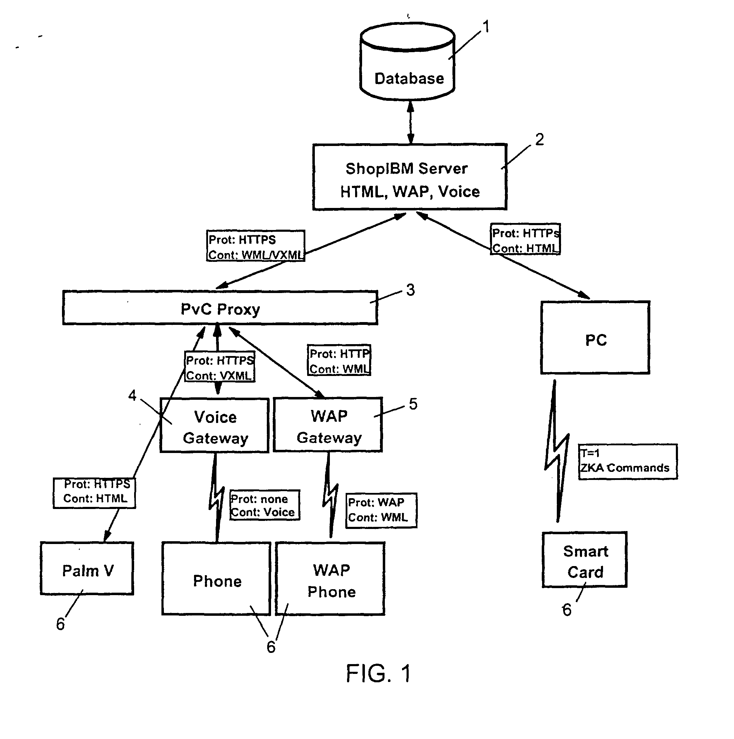

FIG.1 provides a view of a communication architecture in which the present invention may be used preferably. Currently many PVC-devices (6) are available on the market. The famous PVC-devices are personal digital assistants, mobile phones or WAP phones and chipcards.

One Server (2) hosts application functions (1) which may be accessed from different PVC-devices (6) with different levels of authentication and different levels of confidentiality od exchanged data. The other server hosts a PVC-Proxy (3), the Voice Gateway (4) and the WAP Gateway (5).

The PVC-Proxy (3) allows to establish connections to different kinds of PVC-devices (6) and maintains session information (cookies) and device type information for these connections. Connections to clients can be established directly or via the Voice Gateway (4) or WAP Gateway (5). Each incoming request is augmented by the session and devices type information before forwarding it to its destination.

The Voice Gateway (4) includes speech recognition and speech synthesis. It converts voice input from a telephone to HTTP requests and responses containing VXML-like content back to voice.

The WAP Gateway (5) forwards WAP requests as HTTP requests to a server and returns the HTTP responses to devices as WAP responses.

Which content representation has to be used for a particular request is determined by the device info that comes with each request. Which session info has to be used is determined by the cookie information that is contained in each request. Setting the cookie information and the device info to appropriate values is the responsibility of the PVC-Proxy.

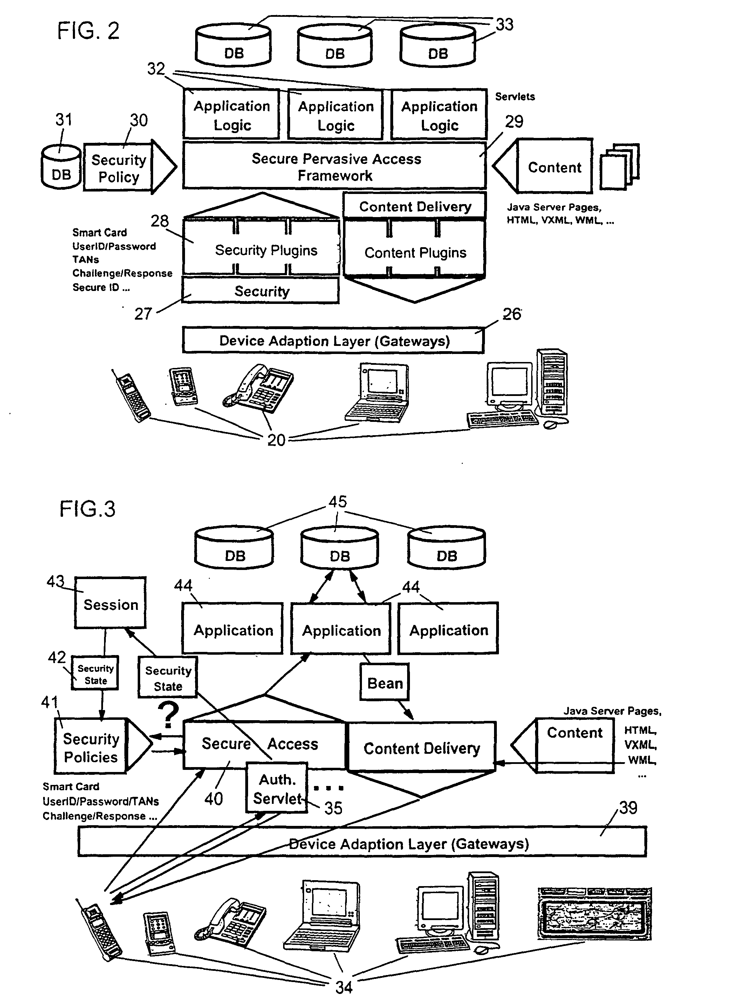

FIG.2 provides drawing of a preferred implementation of a secure pervasive access architecture.

The secure pervasive access architecture preferably comprises following components:
a Device Adaptation Layer (DAL; 26) as gateway for the different PVC-devices (20)
authentication component (27) comprising one or more security plug-ins (SP;28) for executing authentication mechanism
a Secure Pervasive Access Framework (SPAF; 29)
a security policy (30) which is preferably laid down in a data base (31) accessible by the server
several access protected application functions (32) located on the server or on a data base (33) accessible by the server

The communication structure between these components is as follows: The single PVC-device (20) generates a device specific request and sends it to the DAL (26). Requests are routed through the DAL. Preferably DAL includes different kind of gateways that convert device specific requests into a canonical form, e.g. HTTP requests that includes information about device type and desired reply content type, e.g. HTML, WML or VXML. The appropriate security plug-ins (28) is selected based on the information contained in the request and an authentication mechanism as laid down in the selected security plug-in (28) will be executed. The result of the authentication for the PVC-device called security state is stored in a non-volatile memory of the server. Then, the SPAF (29) compares the security state of a PVC-device with the associated security policy (30) for that application function (32) and invokes application function (32) according to the security policy. The security policy (30) comprises correlation of security levels concerning defined user-actions for accessing application functions. For example, the security policy may be implemented in a table in which each application function could have one or more correlation of security level concerning defined user-actions of that application function. The security policy may be different depending from the type of information to be accessed or type of PVC-device. For example one non-sensitive application function may only have function accessible to everybody, while another application function may have functions that may only be performed by PVC-devices that have been authenticated by the security plug-ins or security modules using cryptographic protocol. The security policy may be stored in a special data base.

SPAF compares security state delivered by the security plug-in with security policy associated with the respective application function. If the security state of the PVC-device satisfies the access conditions defined by the security policy the SPAF invokes the requested application function.

FIG.3 provides a drawing showing authentication and access via secure pervasive access.

PVC-devices (34) like mobile, personal digital assistants, chipcards generates a device specific request and sends that request to the DAF (39). If a conversion is required DAF converts the device specific request into a canonical request including a cookie. A cookie contains a packet of information which the server sends to DAF or the PVC-device to be sent back by the DAF or PVC device every time it reconnects with the that server. Cookies are mainly used to authenticate the PVC-device against the server. Some PVC-devices do not support handling of cookies, e.g. WAP phone or personal digital assistant. For these devices DAF (39) offers the functionality to support cookies.

Cookies will be generated as follows: PVC-device initiates by means of requests a communication via DAF (if necessary) with the SPAF (40) offering access to applications. The request contains information for authentication of the PVC-device, e.g. user ID and/or password.

Security plug-in or authentication servlets (35) using a specific authentication mechanism and if the authentication succeeds then the SPAF (40) creates a new session object with an associated session ID (43). Then the SPAF (40) uses the security state for the already authenticated PVC-device comprising result of the authentication and authentication information or parts of it contained in the request of the PVC-device and puts the security state (42) into the session object. SPAF (40) assigns a sessionID to the PVC-device and returns a response with a cookie containing the sessionID. The PVC device or DAF receives the response and stores the cookie. Each subsequent request send back by the PVC device to the SPAF contains that cookie.

PVC-device (34) sends new request to the SPAF to access an application function, e.g. query confidential information. SPAF gets the sessionID from the cookie contained in that request, looks for the session object associated with that sessionID from the cookie and gets the security state contained in that session object. Then, SPAF checks security state contained in that session object with the security policy (41). If the security state (42) satisfies the security policy (41) the SPAF invokes the requested application function and returns a response. The PVC-device displays the response.

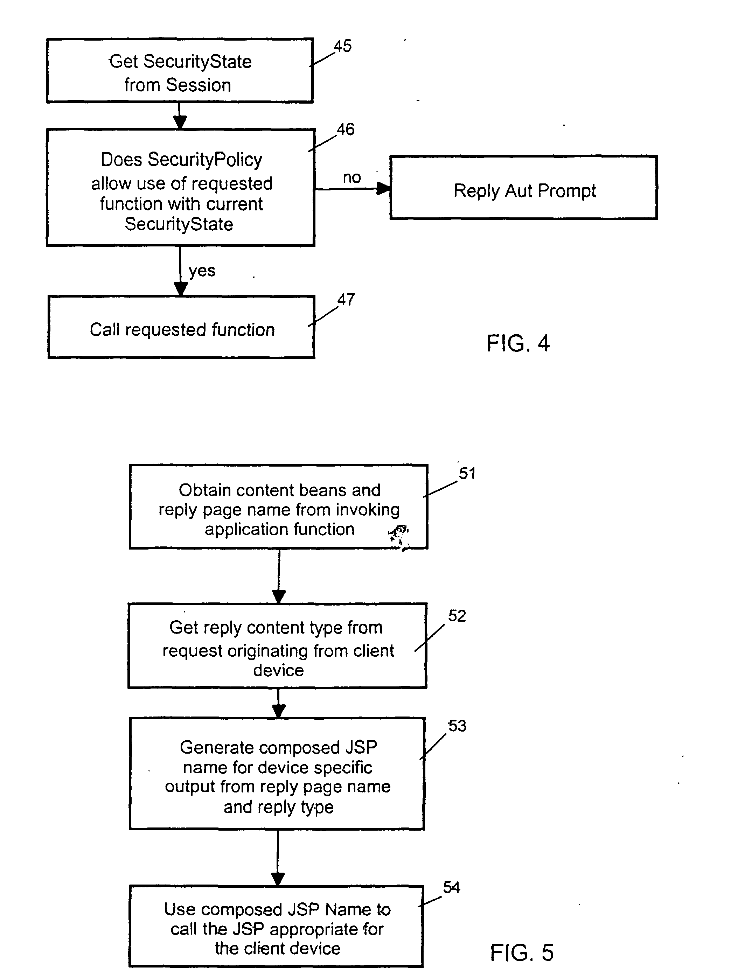

FIG.4 provides a diagram showing the basic method steps of the present invention.

The basic method comprises the step of "get security state from the session (45)" , checking the received security state with the security policy (46) and calling the requested application function (47) if the security policy allows access to that application function. The security state will be preferably handled by security plug-ins as already explained above. Each plug-in contains one authentication mechanism, e.g. authentication by userID/password, Challenge/Response, digital signature. The plug-ins are independent from the application function to be invoked.

The method steps for checking the received security state and allowing access to the desired application function are laid down in the Secure Pervasive Access Framework (SPAF). SPAF has an common interface to the accessible application functions.

FIG.5 provides the method steps of the Delivery Module for each outgoing response.

The Delivery Module renders the information into content that depends on the device type and desired reply content type. Which content of representation has to be used for a particular request is determined by the device info contained in each request (51, 52). For each content type, e.g. HTML, WML or VXML, there are different kind of Java Server Pager (JSPs) for content rendering. JSP can be used to generate arbitrary content by using the appropriate JSP tag to define the desired content type (53, 54).

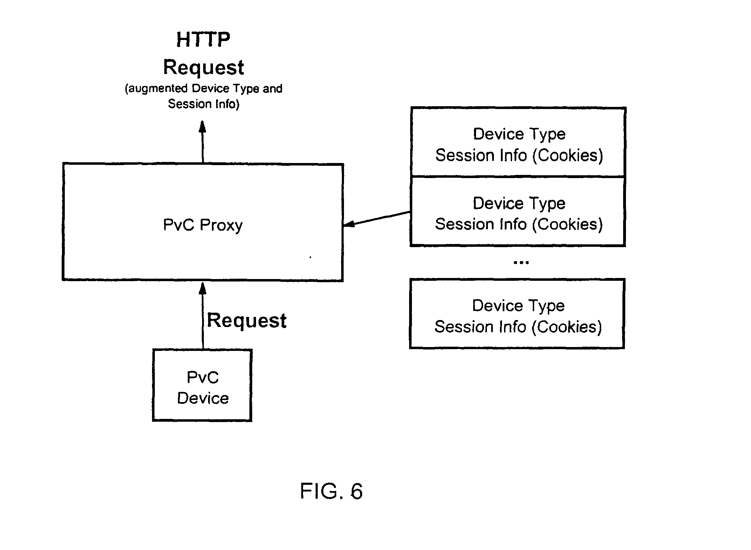

FIG.6 provides the basic functionality of the PVC proxy. As already explained above the PVC-proxy support those PVC-devices which do not support handling of cookies. Proxy receives the cookies sent by the server and includes the cookie in the request of the appropriate PVC-device.
Furthermore, the PVC-proxy converts the PVC-device specific requests into canonical requests as far it is required.

## Claims

1. Security system for controlling access to application functions (32;44) located on a server or accessible via a server, wherein clients (20; 34) communicate with said server by means of requests for accessing one of said application functions (32; 44) using wired, wireless, or partly wireless network, wherein access to said application functions is controlled by security requirements, **characterized in that**:
an authentication component (27) functionally separated from said clients (20; 34) and said application functions (32; 44) for processing client's request independently of client's type, containing different authentication mechanism (28) and selecting and executing an authentication mechanism (28) based on the information contained in the client's request resulting in a security state (42);
a security component (29; 40) containing a security policy (30; 41) describing security requirements, e.g. security level, for accessing application functions, comparing security state (42) associated to a client with the security level of the application function and allowing access to the specified application function if the security state fulfills the requirements of the security level.

2. System according to claim 1, **characterized in that** said clients (20; 34) are PVC-devices.

3. System according to claim 1, **characterized in that** said authentication component (27) and said security component (29; 40) are integrated in one component stored on a server.

4. System according to claim 1, **characterized in that** said authentication component (27) consists of security plug-ins (28) whereby each authentication mechanism is laid down in a separate security plug-in.

5. System according to claim 4, **characterized in that** the authentication mechansim (28) may be UserID/Password, Challenge/Response or digital signature.

6. System according to 2 further **characterized in that** :
a component (26; 39) for converting PVC-device specific requests into canonical requests before said request is used by said authentication component (27).

7. Method for controlling access to application functions stored on a server or accessible via server, wherein clients communicate with said server by means of requests for accessing one of said application functions using wired, wireless or partly wireless network, whereby access to said application functions is controlled by a security requirements, **characterized by** the steps of:
routing all incoming requests created by said clients (26; 34) to an authentication component (27) which is functionally independent from said clients and said application functions (32; 44), said authentication component (27) comprises the steps of:
authentication of said client by determining an authentication mechanism provided by said authentication component by means of authentication information contained in said request and applying said authentication mechanism
storing result of said authentication and said authentication information or parts of it contained in said request (security state)
using security requirements for application function to be accessed
comparing stored security state (42) with said security requirements (41) for accessing the requested application function
invoking requested application function if security state fulfills said security requirements.

8. Method according to claim 7 **characterized in that** said incoming requests are canonical requests.

9. Method according to claim 8 **characterized in that** said canonical requests are created by a Device Adaptation Layer (26; 39) which converts client specific requests into canonical requests.

10. Method according to claim 7 further **characterized by** steps of:
creating a session identifier (43) when establishing a communication between a client and a server and using said session identifier in all requests and responses between said client and said server.

11. Method according to claim 10 **characterized in that** said session identifier (43) and said security state (42) are laid down in a cookie, whereby said cookie is inserted into each request and response between client and server.

12. Method according to claim 7 **characterized in that** said clients are PVC-devices.

13. A computer program **characterized by** computer program code portions for performing respective steps of the method according to claim 7 to 12 when the program is executed in a computer.

14. Computer program product stored on a computer-readable media containing software code for performing of the method according to one of the claim 7 to 12 if the program product is executed on the computer.

## Patentansprüche

1. Ein Sicherheitssystem zum Steuern des Zugangs zu Anwendungsfunktionen (32, 44), die sich auf einem Server befinden oder auf die über einen Server zugegriffen werden kann, wobei Clients (20, 34) mit dem genannten Server kommunizieren mithilfe von Mitteln zur Anforderung für einen Zugang zu einer der genannten Anwendungsfunktionen (32, 44) unter Verwendung eines verdrahteten, drahtlosen oder teilweise drahtlosen Netzwerks, wobei der Zugang zu den genannten Anwendungsfunktionen durch Sicherheitsanforderungen gesteuert wird, **dadurch gekennzeichnet, dass**
eine Identifikationskomponente (27) funktional von den genannten Clients (20, 34) getrennt ist und die genannten Anwendungsfunktionen (32, 44) zum Verarbeiten der Client-Anforderungen vom Client-Typ unabhängig sind und einen anderen Identifikationsmechanismus (28) enthalten und einen Identifikationsmechanismus (28) basierend auf den in der Client-Anforderung enthaltenen Informationen auswählen und ausführen, was einen Sicherheitsstatus (42) ergibt,
eine Sicherheitskomponente (29, 40) Sicherheitsvorgaben (30, 41) enthält, die Sicherheitsanforderungen beschreiben, beispielsweise eine Sicherheitsstufe, auf Anwendungsfunktionen zugreift, den Sicherheitsstatus, der einem Client mit der Sicherheitsstufe der Anwendungsfunktion zugeordnet wird, vergleicht und den Zugang zur angegebenen Anwendungsfunktion gestattet, wenn der Sicherheitsstatus die Anforderungen der Sicherheitsstufe erfüllt.

2. Ein System nach Anspruch 1, **dadurch gekennzeichnet, dass** es sich bei den genannten Clients (20, 34) um PVC-Geräte handelt.

3. Ein System nach Anspruch 1, **dadurch gekennzeichnet, dass** die genannte Identifikationskomponente (27) und die genannte Sicherheitskomponente (29, 40) in einer Komponente integriert sind, welche auf einem Server gespeichert ist.

4. Ein System nach Anspruch 1, **dadurch gekennzeichnet, dass** die genannte Identifikationskomponente (27) aus Sicherheits-Plug-Ins (28) besteht, wobei sich jeder Identifikationsmechanismus in einem separaten Sicherheits-Plug-In befindet.

5. Ein System nach Anspruch 4, **dadurch gekennzeichnet, dass** es sich bei dem Identifikationsmechanismus (28) um Benutzer-ID/Passwort, Challenge/Response oder digitale Signatur handeln kann.

6. Ein System nach Anspruch 2, weiterhin **dadurch gekennzeichnet, dass**:
eine Komponente (26, 39) zum Konvertieren PVC-Gerätespezifischer Anforderungen in kanonische Anforderungen von der genannten Identifikationskomponente (27) verwendet wird.

7. Eine Methode zum Steuern des Zugangs zu Anwendungsfunktionen, die sich auf einem Server befinden oder auf die über einen Server zugegriffen werden kann, wobei Clients mit dem genannten Server kommunizieren mithilfe von Mitteln zur Anforderung für einen Zugang zu einer der genannten Anwendungsfunktionen unter Verwendung eines verdrahteten, drahtlosen oder teilweise drahtlosen Netzwerks, wobei der Zugang zu den genannten Anwendungsfunktionen durch Sicherheitsanforderungen gesteuert wird, durch folgende Schritte gekennzeichnet:
Weiterleiten aller eingehenden Anforderungen, die von den genannten Clients (26, 34) erstellt und an eine Identifikationskomponente (27) gegeben wurden, die funktional unabhängig ist von den genannten Clients und den genannten Anwendungsfunktionen (32, 44), wobei die genannte Identifikationskomponente (27) folgende Schritte umfasst:
Identifikation des genannten Clients durch Bestimmen eines Identifikationsmechanismus, der von der genannten Identifikationskomponente bereitgestellt wird, mithilfe von Identifikations-Informationen, die sich in der genannten Anforderung befinden und durch Anwenden des genannten Identifikationsmechanismus,
Speichern des Ergebnisses der genannten Identifikation und der genannten Identifikations-Informationen oder von Teilen davon in der genannten Anforderung (Sicherheitsstatus),
Verwenden der Sicherheitsanforderungen für den Zugang zur Anwendungsfunktion,
Vergleichen des gespeicherten Sicherheitsstatus (42) mit den genannten Sicherheitsanforderungen (41) zum Zugang zur angeforderten Anwendungsfunktion,
Aufrufen der angeforderten Anwendungsfunktion, wenn der Sicherheitsstatus die genannten Sicherheitsanforderungen erfüllt.

8. Eine Methode nach Anspruch 7, **dadurch gekennzeichnet, dass** es sich bei den genannten eingehenden Anforderungen um kanonische Anforderungen handelt.

9. Eine Methode nach Anspruch 8, **dadurch gekennzeichnet, dass** die genannten kanonischen Anforderungen von einer Device Adaption Layer (26, 39) erstellt werden, die die Client-spezifischen Anforderungen in kanonische Anforderungen konvertiert.

10. Eine Methode nach Anspruch 7, weiterhin durch folgende Schritte **gekennzeichnet**:
Erstellen einer Sitzungs-Kennung (43) beim Herstellen einer Kommunikation zwischen einem Client und einem Server und Verwenden der genannten Sitzungs-Kennung in allen Anforderungen und Antworten zwischen dem genannten Client und dem genannten Server.

11. Eine Methode nach Anspruch 10, **dadurch gekennzeichnet, dass** die genannte Sitzungs-Kennung (43) und der genannte Sicherheitsstatus (42) in einem Cookie festgehalten werden, wobei der Cookie in jede Anforderung und Antwort zwischen dem genannten Client und dem genannten Server eingefügt wird.

12. Eine Methode nach Anspruch 7, **dadurch gekennzeichnet, dass** es sich bei den genannten Clients um PVC-Geräte handelt.

13. Ein Computerprogramm, **gekennzeichnet durch** Computerprogrammcodeteile zum Ausführen der entsprechenden Schritte der Methode nach Anspruch 7 bis 12, wenn das Programm auf einem Computer ausgeführt wird.

14. Ein Computerprogramm, gespeichert auf einem Computerlesbaren Medium mit Softwarecode zum Ausführen der Methodenschritte nach einem der Ansprüche 7 bis 12, wenn das Programm auf einem Computer ausgeführt wird.

## Revendications

1. Système de sécurité destiné à commander l'accès à des fonctions d'application (32 ; 44) situées sur un serveur ou accessibles par l'intermédiaire d'un serveur, dans lequel des clients (20 ; 34) communiquent avec ledit serveur au moyen de requêtes pour accéder à l'une desdites fonctions d'application (32 ; 44) en utilisant un réseau câblé, sans fil, ou partiellement câblé, dans lequel l'accès auxdites fonctions d'application est commandé par des exigences de sécurité, **caractérisé en ce que** :
un composant d'authentification (27) séparé fonctionnellement desdits clients (20 ; 34) et desdites fonctions d'application (32 ; 44) destiné à traiter la requête du client indépendamment du type du client, contenant différents mécanismes d'authentification (28) et destiné à sélectionner et à exécuter un mécanisme d'authentification (28) fondé sur les informations contenues dans la requête du client résultant en un état de sécurité (42),
un composant de sécurité (29 ; 40) contenant une politique de sécurité (30 ; 41) décrivant des exigences de sécurité, par exemple, un niveau de sécurité pour accéder à des fonctions d'application en comparant un état de sécurité (42) associé à un client avec le niveau de sécurité de la fonction d'application, et en permettant l'accès à la fonction d'application spécifiée si l'état de sécurité remplit les exigences du niveau de sécurité.

2. Système selon la revendication 1, **caractérisé en ce que** lesdits clients (20 ; 34) sont des dispositifs de type PVC (circuit virtuel permanent).

3. Système selon la revendication 1, **caractérisé en ce que** le composant d'authentification (27) et ledit composant de sécurité (29 ; 40) sont intégrés en un seul composant mémorisé sur un serveur.

4. Système selon la revendication 1, **caractérisé en ce que** le composant d'authentification (27) est constitué de modules d'extension (28) par lesquels chaque mécanisme d'authentification est placé dans un module d'extension de sécurité séparé.

5. Système selon la revendication 4, **caractérisé en ce que** le mécanisme d'authentification (28) peut être un identificateur d'utilisateur/mot de passe, un défi/réponse ou une signature numérique.

6. Système selon la revendication 2 **caractérisé en outre en ce que** :
un composant (26 ; 39) destiné à convertir des requêtes spécifiques d'un dispositif de type PVC en des requêtes autorisées avant que ladite requête soit utilisée par ledit composant d'authentification (27).

7. Procédé destiné à commander l'accès à des fonctions d'application mémorisées sur un serveur ou accessibles par l'intermédiaire du serveur, dans lequel des clients communiquent avec ledit serveur au moyen de requêtes pour accéder à l'une desdites fonctions d'application en utilisant un réseau câblé, sans fil ou partiellement câblé, par lequel l'accès auxdites fonctions d'application est commandé par des exigences de sécurité, **caractérisé par** les étapes consistant à :
acheminer toutes les requêtes entrantes créées par lesdits clients (26 ; 34) vers un composant d'authentification (27) qui est fonctionnellement indépendant desdits clients et desdites fonctions d'application (32 ; 44), ledit composant d'authentification (24) comprend les étapes consistant à :
authentifier ledit client en déterminant un mécanisme d'authentification fourni par ledit composant d'authentification au moyen d'informations d'authentification contenues dans ladite requête et appliquer ledit mécanisme d'authentification
mémoriser le résultat de ladite authentification et lesdites informations d'authentification ou parties de celles-ci contenues dans ladite requête (état de sécurité)
utiliser les exigences de sécurité pour la fonction d'application à laquelle il doit être fait accès
comparer l'état de sécurité mémorisé (42) auxdites exigences de sécurité (41) pour accéder à ladite fonction d'application demandée
appeler la fonction d'application demandée si l'état de sécurité remplit lesdites exigences de sécurité.

8. Procédé selon la revendication 7, **caractérisé en ce que** lesdites requêtes entrantes sont des requêtes autorisées.

9. Procédé selon la revendication 8, **caractérisé en ce que** lesdites requêtes autorisées sont créées par une couche d'adaptation de dispositif (26 ; 39) qui convertit des requêtes spécifiques de client en des requêtes autorisées.

10. Procédé selon la revendication 7, **caractérisé en outre par** les étapes consistant à :
créer un identificateur de session (43) lors de l'établissement d'une communication entre un client et un serveur, et utiliser ledit identificateur de session pour toutes les requêtes et réponses entre ledit client et ledit serveur.

11. Procédé selon la revendication 10, **caractérisé en ce que** ledit identificateur de session (43) et ledit état de sécurité (42) sont placés dans un programme mouchard, grâce à quoi ledit programme mouchard est inséré dans chaque requête et réponse entre le client et le serveur.

12. Procédé selon la revendication 7, **caractérisé en ce que** lesdits clients sont des dispositifs de type PVC.

13. Programme informatique **caractérisé par** des parties de code de programme informatique destinées à exécuter des étapes respectives du procédé selon les revendications 7 à 12 lorsque le programme est exécuté dans un ordinateur.

14. Produit de programme informatique mémorisé sur un support pouvant être lu par ordinateur contenant un code de logiciel destiné à exécuter le procédé selon l'une des revendications 7 à 12 si le produit de programme est exécuté dans l'ordinateur.
